# EUROPÄISCHE PATENTANMELDUNG

(11) **EP 1 079 675 A2**
(43) Veröffentlichungstag der Anmeldung: **28.02.2001**
(21) Anmeldenummer: 00116085.2
(22) Anmeldetag: 27.07.2000
(51) Int. Cl.: H05K 3/00

(54) **Verfahren zur Erzeugung einer Leitungsstruktur mit wenigstens einem Kabelbündel**

(30) Priorität: 28.07.1999 DE 19935422
(71) Anmelder: DaimlerChrysler AG, 70567 Stuttgart (DE)
(72) Erfinder: Ehrenberg, Bernd, 89079 Ulm (DE); Wernicke, Matthias, 69115 Heidelberg (DE)

(57) **Zusammenfassung**

Ein Verfahren zur Erzeugung einer Leitungsstruktur in Form eines oder mehrere Kabelbündel wird vorgeschlagen, bei welchem durch ggf. mehrfach iterative Überprüfung und Änderung von Leitungsführungen eines elektrischen Systems innerhalb eines mechanischen Aufbaus elektrische, elektromagnetische und mechanische Unverträglichkeiten von vorgenommenen Änderungen frühzeitig erkennbar sind und erforderlichenfalls beseitigt werden können. Durch Datenaustausch zwischen spezialisierten Programmen für mechanische Eigenschaften einerseits und elektrische Eigenschaften andererseits im ggf. mehrfachen Dialog kann in kurzer Zeit eine beide an sich unterschiedliche Belange berücksichtigende Leitungsstruktur in Form einer oder mehrerer Kabelbündel erstellt werden.

## Beschreibung

Die Erfindung betrifft ein Verfahren zur Erzeugung einer Leitungsstruktur mit wenigstens einem Kabelbündel.

In Einrichtungen mit einer Mehrzahl von elektrischen Gerä-ten, innerhalb eines mechanischen Aufbaus, welche untereinander verbunden sind, sind die Verbindungen häufig durch separat gefertigte Kabelbündel gebildet, welche nachträglich in den mechanischen Aufbau eingesetzt und mit den geräteseitigen Anschlüssen verbunden werden. Eine solche Vorgehensweise ist insbesondere bei Fahrzeugen und Flugzeugen üblich. Typischerweise ist der mechanische Aufbau einschließlich der Positionen der Geräte fertig vorgegeben und die Leitungsstruktur wird in diese Vorgabe eingepaßt, wobei der für das elektrische System vorliegende logische Verbindungsplan die Verbindungen im Detail vorgibt.

Aufgabe der vorliegenden Erfindung ist es, ein Verfahren zur Erzeugung einer Leitungsstruktur anzugeben, welches unter Einsatz einer Datenverarbeitungsanlage die Erzeugung einer vollständigen Leitungsstruktur ermöglicht.

Die Erfindung ist im Patentanspruch 1 beschrieben. Die abhängigen Ansprüche enthalten vorteilhafte Ausgestaltungen und Weiterbildungen der Erfindung.

Wesentlich an der Erfindung ist zum einen die einfache Erstellung einer Leitungsstruktur durch gemeinsame Darstellung von mechanischem Aufbau und Verbindungsleitungen und zum anderen die Prüfung eines Leitungsstrukturentwurfs auf eventuelle Kollisionen (Unverträglichkeiten) mit vorgegebenen Einschränkungen, insbesondere Einschränkungen des elektrischen Systems. Solche Einschränkungen können insbesondere durch Unverträglichkeiten bestimmter Leitungen aufgrund der Überkopplung von Störungen, maximale Signaldämpfung entlang einer Leitung etc. sein. Diese Kollisionsprüfung kann vorteilhafterweise vollständig innerhalb der Entwurfsphase auf der Datenverarbeitungsanlage erfolgen, so daß bei Erkennen einer Kollision diese angezeigt und der Entwurf modifiziert werden kann. Von besonderem Vorteil ist dabei, daß die einschränkenden Vorgaben relativ einfach gehalten werden und für die Festlegung der Leitungswege sowie die Zuordnung von Verbindungsleitungen zu solchen Leitungswegen kein komplexes Expertenwissen programmiert zu sein braucht, da diese Maßnahmen über die Bedieneinrichtungen durchführbar sind.

Insbesondere hinsichtlich der Kollisionsprüfungen sind für verschiedene Verfahrensschritte getrennte Programmmodule vorgesehen, welche über gemeinsamen Zugriff auf Dateien oder über den Austausch von Dateien Daten austauschen. Diese Dateien weisen hierfür ein für alle betroffenen Programmmodule kompatibles oder konvertierbares Dateiformat auf. Dies ist wiederum von besonderer Bedeutung für die elektrischen Eigenschaften der Leitungsstruktur, für welche ein separates Programmmodul besondere Vorteile haben kann. Beispielsweise nimmt ein solches Programmmodul bevorzugt die Kollisionsprüfung hinsichtlich elektromagnetischer Verträglichkeit von Leitungen, hinsichtlich der Signaldämpfung u.a. ausführen und/oder eine Zuweisung oder Auswahl von Leitungstypen und/oder Verbindungselementen und/oder Befestigungselementen vor. Leitungstypen sind später noch beispielhaft angegeben und nicht zu verwechseln mit Kabeltypen. Erstere sind insbesondere durch elektrische Parameter insbesondere hinsichtlich elektromagnetischem Kopllungsverhalten, Signalart etc. charakterisiert, während bei letzteren die körperliche Ausformung mit Querschnitt, Krümmungsradiuseinschränkung etc. mit vorgegeben ist. Die in einem von dem die Anzeige des mechanischen Aufbaus und der Verbindungsleitungen/Leitungsstruktur steuernden Hauptprogramm getrennten Programm oder Programmmodul vorgenommenen Zuweisungen werden dann wieder in das Hauptprogramm zurückgespeist und dort oder in einem weiteren Programmmodul weiter bearbeitet. Beispielsweise kann nach Zuweisung eines bestimmten Kabeltyps, z. B. eines Kabels mit abschirmender Ummantelung zu einer Verbindungsleitung eines Leitungswegabschnitts erneut zu prüfen sein, ob der minimale Biegungsradius des zugewiesenen Kabeltyps mit Richtungswechseln innerhalb des Leitungswegabschnitts verträglich ist.

Insbesondere kann ein solches Hauptprogramm ein CAD-Programm für den Entwurf der mechanischen Struktur und ein weiteres Programm ein Entwurfsprogramm für den logischen Leitungsplan sein. Vorzugsweise ist als Hauptprogramm aber ein von dem CAD-Programm für den Entwurf der mechanischen Struktur getrenntes Programm mit CAD-Funktionen in reduziertem Umfang vorgesehen. Es ist dann kein Eingriff in das grundlegende CAD-Programm erforderlich und das Hauptprogramm universeller einsetzbar. Die Funktionen des vorstehend als Hauptprogramm bezeichneten Programms können aber auch in das grundlegende CAD-Programm für den mechanischen Entwurf integriert sein, z. B. als Zusatzmodul oder Plug-in.

Festlegungen und Zuweisungen beim Entwurf der Leitungsstruktur können auch den mechanischen Aufbau selbst ändern und beeinflussen, beispielsweise in Form von Befestigungselementen für Kabelbündel oder in Form von Wandöffnungen zur Durchführung eines Kabelbündels oder zum Einsetzen im Verlauf eines Leitungswegs. Solche Änderungen sind dann wiederum auf mechanische Zulässigkeit zu prüfen.

Auch jede aufgrund einer erkannten Kollision vorgenommene Änderung im Leitungsstrukturentwurfs kann wieder eine neue Kollision nach einem anderen Kriterium auslösen, was bei mehreren separaten Programmmodulen zu mehrfachem Datenaustausch-Dialog führen kann, bis ein vom Benutzer als akzeptierbar bewerteter und bestätigter Entwurf vorliegt, welcher für die Fertigung der Leitungsstruktur in Form eines oder mehrerer Kabelbündel verwandt wird. Die bei der Erstellung des Entwurfs erzeugte Leitungsstruktur wird vorzugsweise in die Beschreibung des mechanischen Aufbaus übernommen, so daß bei einer eventuellen späteren Änderung des mechanischen Aufbaus das Vorhandensein der Leitungsstruktur berücksichtigt werden kann. Ebenso können Änderungen im Verlauf der Verbindungsleitungen insbesondere in Form von Verbindungselementen als Trennstellen mit genauer Kontaktbelegung in den logischen Verdrahtungsplan des elektrischen Systems übernommen werden.

Die Festlegung von Leitungswegen in der vorzugsweise als 3D-Darstellung ausgeführten Anzeige geht gemäß einer vorteilhaften Ausführungsform von einer anfänglichen Abbildung der Verbindungsleitungen zwischen Verbindungselementen bei den Geräten als gerade Linien kürzester Verbindungswege ohne Rücksicht auf den mechanischen Aufbau aus. Die Verbindungselemente an den Geräten können dabei sowohl durch Art und Lage des Geräts in ihrer Position fest vorgegeben oder in ihrer Lage am Gerät ggf. noch vom Benutzer in der Anzeige positionierbar sein.

Die Festlegung von Leitungswegen erfolgt vorzugsweise in Form von aneinander anschließenden Leitungswegabschnitten mit jeweils einheitlicher Leitungsgruppierung innerhalb eines Abschnitts. Leitungswegabschnitte können vorzugsweise durch Festlegung von Abschnittsendpunkten in der Anzeige des mechanischen Aufbaus festgelegt sowie beispielsweise über Umlenkpunkte in ihrem Verlauf geführt werden. Zwischen im Verlauf eines Leitungswegabschnitts benachbarten Endpunkten bzw. Umlenkpunkten erfolgt die Leitungsführung auf direktem Weg, wobei durch Berücksichtigung von endlichen Kabelkrümmungen an Umlenkpunkten und Ausbindungspunkten ein realistischer Verlauf sichergestellt ist und Kabelkrümmungen beispielsweise durch einen bis zur 2. Ableitung der Wegführung stetigen Pfad repräsentiert sind. Die Umlenkradien können sowohl Einschränkungen vom mechanischem Aufbau als auch Einschränkungen von den Kabeltypen der dem Leitungswegabschnitt zugeordneten Verbindungsleitwegen unterworfen sein.

Leitungswegabschnittsendpunkte können insbesondere angebracht sein für Kabelendpunkte an den Geräten, für Ausbindungspunkte eines Kabelbündels und für Trennstellen mit Verbindungselementen. Da die fertigen Kabelbündel durch das Zusammenbinden u. U. kaum noch in sich flexibel sind und um spätere unzulässige Kabelbiegungen beim Einbau auszuschließen, werden Umlenkungen und Ausbindungen nach Biegeradien und Winkel beim Entwurf genau bestimmt und die Kabelbündel mit diesen Werten gefertigt.

Die Kollisionsprüfung umfaßt vorzugsweise die Untersuchung der Verträglichkeit der in einem Kabelbündel eines Leitungswegabschnitts zusammengefaßten Verbindungsleitungen. Kriterien hierfür können beispielsweise sein, daß
- eine Gesamtstromstärke innerhalb eines Leitungsabschnitts nicht überschritten werden darf.
- Steuer- oder Sensorleitungen zu besonders sensiblen, sicherheitsrelevanten Funktionen nicht mit Leitungen mit bestimmten Signaltypen in einen gemeinsamen Leitungswegabschnitt gebündelt sein dürfen.
- störempfindliche Leitungen nicht zusammen mit Störungen abstrahlenden Leitungen in einem Kabelstrang eines Leitungswegabschnitts zusammengebunden sein dürfen.

Ein besonders vorteilhaftes Verfahren zur Durchführung einer automatisierten Kollisionsprüfung, d. h. Bewertung nicht durch den Benutzer sondern durch vorprogrammierte Verfahrensabläufe sieht vor, verschiedene Kriterien für bestimmte Einzelmerkmale zu definieren und Ausschlußverknüpfungen nach Art einer Matrixtabelle vorzugeben. Für den Entwurf eines Kabelbündels kann dann anhand der Leitungszuordnung zu einem Leitungswegabschnitt und anhand der Vorgaben zu Kabeltypen und Signaltypen aus der Definition des elektrischen Systems die Erfüllung einzelner der Kriterien leicht abgeprüft und aus den vorgegebenen Ausschlußverknüpfungen erkannt werden, ob eine Unverträglichkeit vorliegt. Ggf. können die beteiligten Kriterien und/oder Leitungen bei einem Kollisionshinweis mit angegeben werden.

Die Kollisionsprüfung kann dadurch auf einfache Weise schematisiert und insbesondere automatisch ohne Bewertung durch den Benutzer durchgeführt werden. Insbesondere können mehrere Leitungstypen wie beispielsweise besonders einstrahlungsempflindliche oder besonders abstrahlende Leitungen, ggf. noch unter Berücksichtigung einer groben Frequenzbereichseinteilung, vorgegeben sein und einzelne Leitungen des elektrischen Systems als einer der Leitungstypen charakterisiert werden. Die Kollisionskriterien werden dann auf die jeweiligen Leitungsgruppen eines Kabelbündels bzw. eines Leitungswegabschnitts eines verzweigten Kabelbündels angewandt. Besonders vorteilhaft ist, daß die Vorgabe von Leitungstypen und/oder die Vordefinition von Kollisionskriterien unabhängig von einem konkreten Leitungssystem oder Kabelbündel erfolgen kann und das Verfahren damit besonders günstig auf einer Datenverarbeitungsanlage ausführbar ist. Insbesondere können die Kriterien für Kollisionen in Form logischer Verknüpfungen des Vorliegens von Leitungstypen vordefiniert und damit besonders einfach automatisch überprüft werden. Solche Vordefinitionen können nach einmaliger Festlegung dann ohne weitere Modifikation auf verschiedene Kabelbündel angewandt werden und beispielsweise für eine ganze Gruppe von Objekten und/oder innerhalb eines Projekts für alle Objekte oder global gelten. Mit ein und derselben Programmstruktur ist ferner auch eine einfache Anpassung an spezielle Projektanforderungen durch Neudefinition von Leitungstypen und Kriterien möglich.

Die Kollisionsprüfung kann neben der Prüfung der elektromagnetischen Verträglichkeit zusammengefaßter Leitungen vorteilhafterweise noch weitere Kriterien, insbesondere die Überprüfung von Leitungslängen, von Signaldämpfungen zwischen zwei Geräten, von Biegeradien im Verlauf der Leitungswege, von mechanischen Festigkeiten bei für Leitungsdurchgänge mit oder ohne Steckverbindung erzeugten Wandöffnungen, von Überschreitungen zulässiger Querschnitte von Befestigungspunkten u.ä. umfassen.

Eine erkannte Unverträglichkeit innerhalb eines Kabelbündels oder eines Abschnitts desselben veranlaßt die Erzeugung eines Kollisionssignals, welches vorzugsweise Informationen über die Art der Unverträglichkeit und/oder die beteiligten Leitungen im einzelnen beinhaltet und beispielsweise durch eine besondere Anzeigeform (z. B. Farbe, blinkende Anzeige, Markierung) in der Darstellung des Aufbaus mit den Leitungswegen und/oder in einer Auflistung der einzelnen Leitungen ausgegeben wird.

Die Erfindung ist nachfolgend anhand von bevorzugten Ausführungsbeispielen unter Bezugnahme auf die Abbildungen noch eingehend veranschaulicht. Dabei zeigt
- Fig. 1: eine 3D-Darstellung des mechanischen Aufbaus mit symbolischen Verbindungsleitungen.
- Fig. 2: den Aufbau nach Fig. 1 mit teilweise festgelegten Leitungswegabschnitten und diesen zugeordneten Verbindungsleitungen.
- Fig. 3: zwei Kabelbündel als Leitungsstruktur für die Verbindungsleitungen.

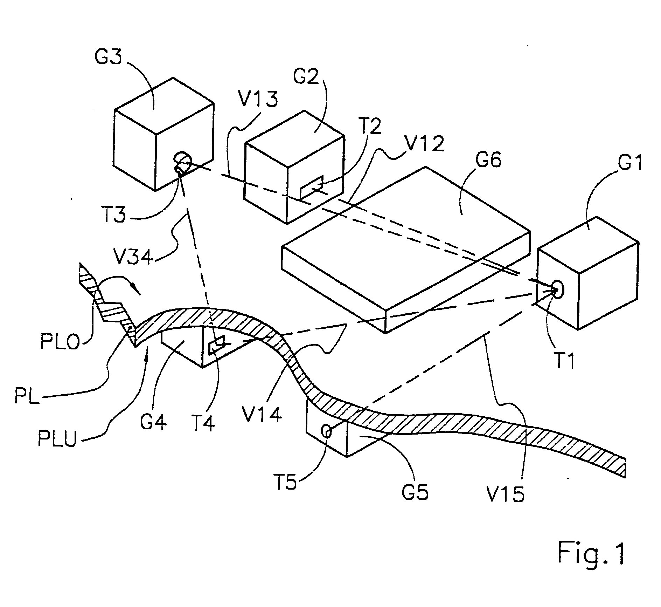

Bei dem in Fig. 1 skizzierten mechanischen Aufbau sind auf Oberseite PLO und Unterseite PLU einer als durchgehend angenommenen, in der Abbildung aufgeschnittenen Platte PL mehrere Geräte G1 bis G6 an festen Positionen angeordnet, wobei die Geräte G1 bis G6 zu einem elektrischen System gehören sollen und über Verbindungsleitungen Vij elektrisch untereinander verbunden sind. Der dargestellte Aufbau ist gegenüber einem realen Aufbau stark vereinfacht und dient lediglich der Veranschaulichung der prinzipiellen Vorgehensweise nach der Erfindung.

An den zu dem elektrischen System gehörenden Geräten G1 bis G6, deren Funktion für die prinzipielle Erläuterung unbeachtlich ist, sind Verbindungselemente T1 bis T5 vorgesehen, welche mit entsprechenden Gegenstücken der zu erzeugenden Leitungsstruktur verbunden werden, insbesondere in Form von Steckverbindungen, die aber auch durch Klemmverbindungen, Lötverbindungen etc. gebildet werden können. An einem Gerät können auch mehrere getrennte solche Verbindungselemente Tn vorgesehen sein. Für die Verbindungselemente T1 bis T5 steht eine begrenzte Zahl von Typen zur Verfügung, welche durch die Art und Anzahl der elektrischen Verbindungen für das einzelne Verbindungselement T1 bis T5 weiter eingeschränkt ist.

Die Position eines Verbindungselements T1 bis T5 an einem Gerät G1 bis G6 kann entweder durch die Bauform des Geräts G1 bis G6 vorgegeben oder durch den Benutzer noch in Grenzen wählbar sein. Die Positionierung durch den Benutzer kann in an sich gebräuchlicher Weise durch direkte Positionsvorgabe über die Tastatur, über 2D-Eingabegeräte (Maus, Trackball) oder 3D-Eingabegeräte, vorzugsweise unter Darstellung einer verschiebbaren Markierung (Cursor) auf der Anzeige erfolgen. Sofern noch eine Mehrzahl von Elementtypen für den Benutzer wählbar gegeben ist, kann die Auswahl anhand einer Typenliste und/oder anhand von Abbildungen erfolgen.

In dem logischen Leitungsplan des elektrischen Systems können vorteilhafterweise gleichfalls die mehradrigen Verbindungsleitungen Vij geräteseitig in Verbindungselementen T1 bis T5, vorzugsweise unter eindeutiger Kontaktzuordnung der einzelnen Adern zusammengefaßt sein. Es ist auch die Zuweisung von Leitungen und/oder einzelnen Adern zu einem Verbindungselement T1 bis T5 durch den Benutzer möglich.

Mit gegebener Zuordnung der Verbindungsleitungen Vij zu geräteseitigen Anschlußelementen oder Verbindungselementen T1 bis T5 kann nach Gleichsetzung eines in der Anzeige dargestellten Anschlußelements Tn mit einem im logischen Leitungsplan des elektrischen Systems vorhandenen Anschlußelement Tn oder nach Zuweisung von Leitungen oder Adern zu einem angezeigten Anschlußelement Tn automatisch unter Verwendung der als Datei oder Tabelle vorliegenden Daten des logischen Leitungsplans bereits eine Darstellung der Verbindungsleitungen Vij in der Anzeige des mechanischen Aufbaus erfolgen, vorzugsweise in Form gerader Linien zwischen den durch die Verbindungsleitungen Vij verbundenen Anschlußelementen Tn der verschiedenen Geräte G1 bis G6. Die Verbindungsleitungen Vij bilden dann in dieser Anzeigeform kürzeste Wege zwischen zwei verbundenen Anschlußelementen T1 mit T3 bzw. T1 mit T2 ohne Berücksichtigung des mechanischen Aufbaus, welcher solche kürzesten Verbindungswege im Regelfall nicht zuläßt. Die Verbindungsleitungen können in der Anzeige vorteilhafterweise in durch Farbe und/oder Form unterscheidbarer Weise dargestellt werden. In der Abbildung nach Fig. 1 sind die Verbindungsleitungen Vij durch unterbrochene, in verdeckten Bereichen punktierte Linien dargestellt.

Eine Kollisionsprüfung ist zwar auch bereits für die symbolische Darstellung der Verbindungsleitungen Vij möglich, aber nicht erforderlich, da diese Leitungsführung noch keinen geometrischen Bezug zu der in Form eines oder mehrerer Kabelbündel zu erzeugenden Leitungsstruktur besitzt.

Der Benutzer kann in der Anzeige Leitungswege festlegen, wobei vorzugsweise die Größe des dargestellten Ausschnitts sowie die Blickrichtung auf das Objekt mittels Tastatur und/oder Eingabegerät variiert werden kann. Hierzu können beispielsweise Endpunkte für Leitungsabschnitte auf Flächen des dargestellten mechanischen Aufbaus positioniert und Leitungswegabschnitte zwischen zwei solchen Endpunkten definiert werden. Leitungswegabschnitte, sind im Regelfall zwischen zwei Endpunkten als gerade angenommen, können aber durch Positionierung von Umlenkpunkten auch in mehrere aneinander anschließende Teile unterteilt sein und eine gewinkelte Verbindung bilden wobei vorteilhafterweise von vornherein die Leitungswegführung stetig, wie bereits beschrieben, erfolgt. Auch gekrümmte Wegelemente können wählbar sein. An den Umlenkpunkten können u. U. Biegeradien definierbar sein, die aber auch automatisch für ein fertiges Kabelbündel auf den für die eingebundenen Kabel minimalen Biegeradius abgestimmt werden können.

Einen Sonderfall für die Festlegung von Leitungswegen stellen Verbindungen durch eine vom Entwurf des mechanischen Aufbaus her geschlossene Fläche dar. Hierfür kann vorteilhafterweise vorgesehen sein, daß der Benutzer mittels eines Cursors eine Position für einen Flächendurchbruch festlegen kann, durch welche entweder ein Kabelbündel durchführbar ist oder an welcher eine Trennstelle in den Leitungswegverlauf in Form einer Steckverbindung oder dgl. anbringbar ist. Die Anbringung einer fest in der Öffnung installierten Steckverbindung mit beidseitig der dadurch durchbrochenen Fläche vorhandenen Steckkontakten ist insbesondere dann einer Kabeldurchführung durch die Öffnung vorzuziehen, wenn der durchzuführende Kabelbündelabschnitt länger und/oder verzweigt und dadurch schwierig in der Handhabung ist. Eine Steckverbindung ist erforderlich, wenn die Fläche eine wesentliche trennende Funktion zwischen zwei Räumen erfüllt und beispielsweise druckdicht oder explosionsschützend ausgebildet sein soll. Eine Trennstelle kann auch sonst in einer Leitungsführung vorgesehen sein, um eine umfangreiche Struktur in mehrere Kabelbündel geringerer Komplexität aufzuteilen. Bei Festlegung einer Trennstelle mit einem Verbindungselement braucht dieses a priori noch nicht vom speziellen Typ her definiert zu werden, sondern kann als Trennstelle an sich (generisches Verbindungselement) eingefügt werden, der später ein bestimmter Typ zugewiesen wird. Die Festlegung einer Flächenöffnung ist auf mechanische Zulässigkeit zu prüfen, was beispielsweise zu einer Kollisionsmeldung führen kann und vom Benutzer dann aber einfach durch Verschieben der Öffnungsposition an eine zulässige Position behoben werden kann. Die Prüfung auf mechanische Zulässigkeit kann im laufenden Programm der Anzeige oder durch Datenaustausch in einem gesonderten Programm oder Programmmodul, welches insbesondere das CAD-Programm zum Entwurf des mechanischen Aufbaus sein kann, erfolgen. Durch die kurzfristige Rückmeldung auf unzulässige Eingriffe in den mechanischen Aufbau können Korrekturen frühzeitig berücksichtigt und umfangreiche grundlegende Änderungen an einer bereits fertiggestellten Leitungsstruktur vermieden werden.
Weitere mechanische Änderungen können bei der Festlegung von Leitungswegen beispielsweise auch vom Benutzer positionierbare Befestigungselemente FE sein, für welche gleichfalls die mechanische Zulässigkeit, beispielsweise hinsichtlich der Verbindung mit einer Trägerfläche oder einem anderen Trägerelement des mechanischen Aufbaus durch Schrauben, Nieten, Kleben etc. oder hinsichtlich der Belastbarkeit des mechanischen Verbindungspunkts, der Trägerfläche oder eines anderen Trägerelements überprüft werden kann.

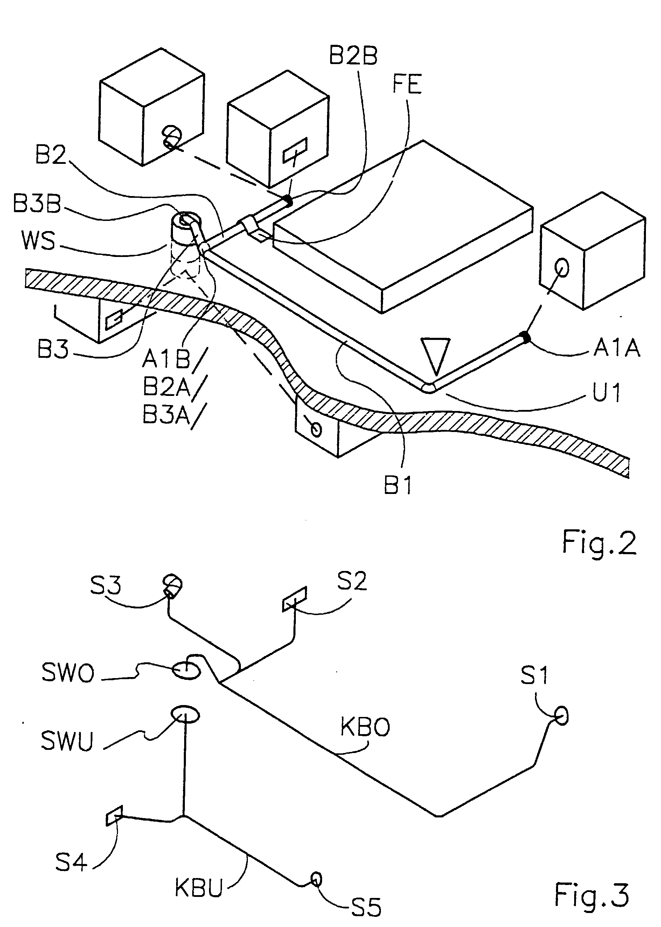

Die Fig. 2 zeigt ein Zwischenstadium in der Festlegung der Leitungsstruktur, wobei ein erster Leitungswegabschnitt B1 zwischen Endpunkten A1A und A1B, ein zweiter Leitungswegabschnitt B2 zwischen Endpunkten B2A und B2B und ein dritter Leitungswegabschnitt B3 zwischen Endpunkten B3A und B3B definiert sind. Ferner ist eine Trennstelle als ein Steckverbinder WS in einer eingefügten Öffnung der Platte PL festgelegt. Der erste Leitungswegabschnitt B1 ist an einem Umlenkpunkt U1 abgewinkelt. Die drei Leitungswegabschnitte B1, B2 und B3 treffen sich in einem Verzweigungspunkt, in dem die Endpunkte A1B des ersten, B2A des zweiten und B3A des dritten Leitungswegabschnitts B1, B2 bzw. B3 zusammenfallen. Der dritte Leitungswegabschnitt B3 führt von dem Verzweigungspunkt zu dem Verbindungselement WS.

Den Leitungswegabschnitten B1, B2, B3 können unmittelbar nach ihrer Festlegung auch Verbindungsleitungen Vij gemäß Fig. 1 zugeordnet werden, was wiederum durch den Benutzer über die gebräuchlichen Bedienelemente erfolgen kann. Die Zuordnung kann auch nur für einen Teil der Adern einer mehradrigen Verbindungsleitung Vij vorgenommen werden. Mit Zuordnung einer Verbindungsleitung Vij zu einem Leitungswegabschnitt B1, B2 bzw. B3 wird vorteilhafterweise die Darstellung automatisch derart verändert, daß die symbolischen Verbindungsleitungen Vij nicht mehr zwischen den festliegenden Anschlußpunkten an den Anschlußelementen Tn der Geräte G1 bis G6, sondern von diesen Anschlußpunkten Tn zu jeweils einem der Endpunkte A1A, A1B, ... B3B des Leitungswegabschnitts B1, B2 bzw. B3, also beispielsweise vom Anschlußpunkt T1 am Gerät G1 zum Endpunkt A1A des ersten Leitungswegabschnitts, verlaufen.
Im in Fig. 2 skizzierten Beispiel sind die Verbindungsleitungen V12, V13, V14 und V15 dem ersten Leitungswegabschnitt B1 zugeordnet, womit alle vom Anschlußelement T1 des Geräts G1 ausgehenden Verbindungsleitungen V12 bis V15 in diesem Leitungswegabschnitt B1 gebündelt sind und auch vom Anschlußelement T1 zum Endpunkt A1A des ersten Leitungswegabschnitts B1 durch eine einzige symbolische Verbindungsleitung Vij repräsentiert sein können. Dem zweiten Leitungswegabschnitt B2 seien die Verbindungsleitungen V12, V13 und V34, dem dritten Leitungswegabschnitt B3 die Verbindungsleitungen V14, V15 und V34 zugeordnet.

Die drei Leitungswegabschnitte B1 bis B3 enthalten damit jeweils verschiedene Kombinationen von Verbindungsleitungen Vij und sind daher auch jeweils einzeln auf elektrische bzw. elektromagnetische Verträglichkeit der in ihnen verbundenen Leitungstypen zu überprüfen. Eine solche Überprüfung kann in dem Programm oder Programmmodul, welches auch die Anzeige mit den Möglichkeiten der Leitungswegfestlegung steuert und welches beispielsweise auch das Programm zur Erstellung des mechanischen Aufbaus sein kann, oder in einem separaten Programm oder Modul, welches beispielsweise auch das Programm zum Entwurf des logischen Leitungsplans des elektrischen Systems sein kann, erfolgen. Dabei kann es, insbesondere im ersten Falle, von Vorteil sein, jede Veränderung der Leitungsführung und Leitungszuordnung unmittelbar auf die Verträglichkeit von Leitungen automatisch zu überprüfen, oder auch, insbesondere im zweitgenannten Fall, eine Überprüfung auf Verträglichkeit gebündelter Leitungen erst auf Veranlassung des Benutzers durchzuführen. Für das Verbindungselement WS an der die Platte PL durchstoßenden Trennstelle, kann ein Elementtyp aus einer durch Art und Anzahl der durchzuverbindenden Leitungen eventuell verbleibenden Auswahl von Benutzer ausgewählt werden, wobei beispielsweise wieder ein auf den Entwurf des elektrischen Leitungsplans speziell ausgerichtetes Programm dienen kann. Ein ausgewählter Elementtyp für das Verbindungselement wird wiederum einer Prüfung auf Zulässigkeit im mechanischen Aufbau überprüft.

Die übrigen in der Skizze nach Fig. 2 noch nicht zugeordneten symbolisch dargestellten Verbindungsleitungen können in entsprechender Weise weiteren, die Leitungsstruktur vervollständigenden Leitungswegabschnitten zugeordnet werden, wodurch, unter der Annahme, daß keine nicht ausräumbaren Kollisionen elektrischer, elektromagnetischer oder mechanischer Art vorliegen, sich beispielsweise eine fertige Leitungsstruktur mit zwei getrennten Kabelbündeln KBO und KBU wie in Fig. 3 skizziert ergibt. Das an der Unterseite der Platte PL befindliche Kabelbündel KBU mit zu den Anschlußelementen Tn der Geräte G4 und G5 entsprechend ausgestalteten Verbindungselementen S4 und S5 an den Enden der Kabelstränge und das an der Oberseite PLO der Platte PL angeordnete Kabelbündel KBO sind über die Plattendurchführung mit Elementen SWU und SWO sowie dem in die Plattenöffnung eingesetzten Element WS miteinander verbindbar und bilden dann die gesamte elektrische Leitungsstruktur.

Der Prüfung auf elektrische und elektromagnetische Verträglichkeit mehrerer in einen Leitungswegabschnitt B1 bis B3 zusammengebundener Leitungen Vij geht vorteilhafterweise eine Zuordnung der Verbindungsleitungen Vij oder auch deren einzelner oder in Gruppen zusammengefaßter Adern zu einem von mehreren Leitungstypen voraus. Als Leitungstypen sind beispielsweise vorgegeben:

| **Typ** | **Beschreibung** |
|---|---|
| KE | Störstrahlung emittierend |
| KS | auf Einstrahlung empfindlich |
| KX | Störstrahlung emittierend und auf Einstrahlung |
| KC | empfindlich |
| KA | Leitung mit sensiblem Datentransfer |
| KN | besonders sicherheitsrelevante Signalleitungen |
| ...... | neutrale Leitungen (keine Unverträglichkeiten) |
| . | .......... |

Die Überprüfung auf Verträglichkeit zusammengebundener Leitungen Vij kann bei einer solchen Vorgabe von Leitungstypen und Zuordnung einzelner Leitungen Vij zu einem Leitungstyp besonders einfach in Form von Verknüpfungen der in einem Bündel VBO, KBU oder Bündelabschnitt auftretenden Leitungstypen, ggf. unter Berücksichtigung deren Anzahl formuliert werden, wozu in der nachfolgenden Tabelle einige Verknüpfungen, welche als unverträglich vordefiniert sind, aufgelistet sind:

| Typ: | KE | KS | KX | KC | KA | KN | Bedingung |
|---|---|---|---|---|---|---|---|
| | >0 | >0 | | | | | KE>0 und KS>0 |
| | | | >1 | | | | KX>1 |
| | >0 | | | >0 | | | KE>0 und KC>0 |
| | >0 | | | | >0 | | KE>0 und KA>0 |
| | | | >0 | | >0 | | KX>0 und KA>0 |
| | | | | | | | .............. |

Die Bedingung >0 für einen Leitungstyp ist erfüllt, wenn wenigstens eine Leitung Vij dieses Typs im untersuchten Bündel KBO oder KBU vorhanden ist. Auch mehrere Leitungen Vij desselben Typs können untereinander unverträglich sein, wofür als Beispiel die Bedingung KX>1, d.h. zwei oder mehr Leitungen Vij des Leitungstyps KX angeführt ist.

Eine erkannte Unverträglichkeit kann insbesondere durch Änderung der Leitungszuordnung zu Leitungswegen beseitigt werden. Im Einzelfall kann eventuell auch durch Neuzuweisung einer Leitung zu einem anderen Leitungstyp, beispielsweise durch Ersatz einer ungeschirmten durch eine geschirmte Leitung eine erkannte Unverträglichkeit beseitigt werden.

Der besondere Vorteil der Vorgehensweise mit der Vordefinition einfacher logischer und/oder numerischer Bedingungen liegt in der Objektunabhängigkeit einer solchen Vordefinition. Insbesondere können die Prüfungskriterien ohne Modifikation einheitlich auf alle, in der Leitungskombination im Regelfall verschiedenen Leitungswegabschnitte angewandt werden. Ferner kann eine auf solchen Vordefinitionen beruhende Überprüfung wegen der einfachen Formulierung der Bedingungen auf jede Veränderung bei der Zuordnung von Leitungen zu Leitungswegabschnitten prompt reagieren und die veränderte Zuordnung quasi verzögerungsfrei neu bewerten.

Die vorstehend und in den Ansprüchen angegebenen Merkmale sind sowohl einzeln als auch in verschiedenen Kombinationen vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verfahren zur Generierung einer durch ein oder mehrere Kabelbündel (KBO, KBU) gebildeten Leitungsstruktur für ein elektrisches System innerhalb eines mechanischen Aufbaus unter Verwendung einer Datenverarbeitungsanlage, wobei das elektrische System mehrere im mechanischen Aufbau verteilt angeordnete Geräte (G1 bis G6) umfaßt, welche durch die Leitungsstruktur und geräteseitige Verbindungselemente (T1 bis T5 bzw. S1 bis S5) untereinander elektrisch verbunden sind, mit folgenden Merkmalen:
a) ein Entwurf für den mechanischen Aufbau wird von der Datenverarbeitungsanlage als Bild dargestellt;
b) ein Verbindungsplan des elektrischen Systems wird in Form eines Leitungsdatensatzes mit der Darstellung des mechanischen Aufbaus in der Weise verknüpft, daß Verbindungselemente (T1 bis T5 bzw. S1 bis S5) an den Geräten (G1 bis G6) und Verbindungsleitungen (Vij) zwischen diesen dargestellt werden;
c) über Bedieneinrichtungen werden innerhalb der Darstellung des mechanischen Aufbaus Leitungswege festgelegt und Verbindungsleitungen (Vij) solchen Leitungswegen zugeordnet;
d) die nach c) gemachten Festlegungen und Zuordnungen werden auf Kollisionen mit vorgegebenen mechanischen und/oder elektrischen Einschränkungen überprüft und Kollisionen werden angezeigt und
e) eine Darstellung der Leitungswege mit vollständiger Zuordnung der Verbindungsleitungen (Vij) zu Leitungswegabschnitten (B1 bis B3) wird ggf. nach wiederholter Durchführung der Schritte c) und d) als Entwurf für ein oder mehrere Kabelbündel (KBO, KBU) mit Verbindungselementen (T1 bis T5 bzw. S1 bis S5) weiterverwendet.

2. Verfahren nach Anspruch 1, dadurch gekennzeichnet, daß die Festlegung von Leitungswegen die Positionierung von Endpunkten (A1A, A1B bis B3B) von Leitungswegabschnitten (B1 bis B3) umfaßt.

3. Verfahren nach Anspruch 1 oder 2, dadurch gekennzeichnet, daß die Festlegung von Leitungswegen die Positionierung von Verzweigungspunkten umfaßt.

4. Verfahren nach einem der Ansprüche 1 bis 3, dadurch gekennzeichnet, daß die Festlegung von Leitungswegen die Positionierung von Kabelbefestigungen (FE) umfaßt.

5. Verfahren nach einem der Ansprüche 1 bis 4, dadurch gekennzeichnet, daß die Festlegung von Leitungswegen die Positionierung von Umlenkpunkten (U1) innerhalb eines Leitungswegabschnitts (B1) umfaßt.

6. Verfahren nach einem der Ansprüche 1 bis 5, dadurch gekennzeichnet, daß die Festlegung von Leitungswegen die Positionierung von Verbindungselementen (T1 bis T5 bzw. S1 bis S5) umfaßt.

7. Verfahren nach Anspruch 6, dadurch gekennzeichnet, daß die Positionierung von Verbindungselementen (T1 bis T5, S1 bis S5) die Einfügung von Trennstellen in dem Verlauf von Verbindungsleitungen zwischen Geräten beinhaltet.

8. Verfahren nach einem der Ansprüche 1 bis 7, dadurch gekennzeichnet, daß die Festlegung von Leitungswegen als Änderungen in die Beschreibung mechanischen Aufbaus übertragen werden.

9. Verfahren nach einem der Ansprüche 1 bis 8, dadurch gekennzeichnet, daß als Trennstellen eingefügte Verbindungselemente (T1 bis T5, S1 bis S5) in die Beschreibung des Verdrahtungsplans des elektrischen Systems übertragen werden.

10. Verfahren nach einem der Ansprüche 1 bis 9, dadurch gekennzeichnet, daß die Kollisionsprüfung die elektromagnetische Verträglichkeit von in einem Abschnitt eines Kabelbündels (KBO, KBU) zusammengefaßten Leitungen umfaßt.

11. Verfahren nach einem der Ansprüche 1 bis 10, dadurch gekennzeichnet, daß die Kollisionsprüfung die Bestimmung der Signaldämpfung auf Leitungswegen und den Vergleich mit zulässigen Werten umfaßt.

12. Verfahren nach einem der Ansprüche 1 bis 11, dadurch gekennzeichnet, daß die Kollisionsprüfung die Erkennung von Leitungsdurchgängen durch Wände ohne Trennstellen umfaßt.

13. Verfahren nach einem der Ansprüche 1 bis 12, dadurch gekennzeichnet, daß einzelne oder mehrere der Verfahrensschritte von wenigstens zwei verschiedenen auf der Datenverarbeitungsanlage lauffähigen Programmen ausgeführt werden und Daten zwischen den verschiedenen Programmen über Dateien mit kompatiblen Dateiformaten ausgetauscht werden.

14. Verfahren zur Prüfung der elektromagnetischen Verträglichkeit von mehreren in einem Kabelbündel (KBO, KBU) zusammengefaßten Leitungen eines elektrischen Systems mit vorgegebenen elektrischen Eigenschaften, insbesondere nach einem der vorhergehenden Ansprüche, mit folgenden Merkmalen:
a) daß mehrere Leitungstypen vordefiniert werden;
b) daß Kriterien für Unverträglichkeiten von Leitungstypkombinationen vordefiniert werden;
c) daß Leitungen eines Kabelbündels b(KBO, KBU) eines elektrischen Systems jeweils einem der vordefinierten Leitungstypen zugeordnet werden;
d) daß in dem Kabelbündel (KBO, KBU) zusammengefaßten Leitungen nach den Kriterien für die Unverträglichkeit von Leitungstypen abgeprüft werden und bei einer erkannten Unverträglichkeit ein Kollisionssignal erzeugt wird.

15. Verfahren nach Anspruch 14, dadurch gekennzeichnet, daß die Leitungstypen und die Kriterien für die Unverträglichkeit von Leitungstypen unabhängig von einem konkreten System vordefiniert werden.

16. Verfahren nach Anspruch 14 oder 15, dadurch gekennzeichnet, daß bei der Vordefinition der Leitungstypen Signalformen als Klassifizierungsmerkmal berücksichtigt werden.

17. Verfahren nach einem der Ansprüche 14 bis 16, dadurch gekennzeichnet, daß bei der Vordefinition von Leitungstypen die elektromagnetische Abstrahlung von Leitungstypen als Klassifizierungsmerkmal berücksichtigt wird.

18. Verfahren nach einem der Ansprüche 14 bis 17, dadurch gekennzeichnet, daß bei der Vordefinition von Leitungstypen die Empfindlichkeit von Signalempfängern angeschlossener Geräte (G1 bis G6) gegen Störungen auf der Verbindungsleitung (Vij) als Klassifizierungsmerkmal berücksichtigt wird.

19. Verfahren nach einem der Ansprüche 14 bis 18, dadurch gekennzeichnet, daß bei der Vordefinition von Leitungstypen Signalfrequenzbereiche als Klassifizierungsmerkmal berücksichtigt werden.

20. Verfahren nach einem der Ansprüche 14 bis 19, dadurch gekennzeichnet, daß die Kriterien für Unverträglichkeiten von Leitungstypkombinationen logische Verknüpfungen für das Vorhandensein von verschiedenen Leitungstypen umfassen.

21. Verfahren nach einem der Ansprüche 14 bis 20, dadurch gekennzeichnet, daß bei Kriterien für Unverträglichkeiten von Leitungstypkombinationen die Anzahl von Leitungen desselben Leitungstyps berücksichtigt werden.

22. Verfahren nach einem der Ansprüche 14 bis 21, dadurch gekennzeichnet daß dem Kollisionssignal eine Information über die Art der Unverträglichkeit beigefügt wird.

23. Verfahren nach einem der Ansprüche 14 bis 22, dadurch gekennzeichnet, daß mit der Kollision die unverträglichen Leitungen im einzelnen mit angegeben werden.

24. Verfahren nach Anspruch 23, dadurch gekennzeichnet, daß die unverträglichen Leitungen in einer Leitungsliste in einer besonderen Darstellung oder mit einer besonderen Markierung angezeigt werden.
